# EUROPÄISCHE PATENTSCHRIFT

(11) **EP 3 995 772 B1**
(45) Veröffentlichungstag und Bekanntmachung des Hinweises auf die Patenterteilung: **14.02.2024**
(21) Anmeldenummer: 21185045.8
(22) Anmeldetag: 12.07.2021
(51) Int. Cl.: F28D 20/00

(54) **VERFAHREN ZUR HERSTELLUNG EINES VAKUUMSPEICHERS FÜR WARMWASSER UND QUETSCHWERKZEUG ZUR DURCHFÜHRUNG DES VERFAHRENS**
METHOD FOR MANUFACTURING A VACUUM STORAGE DEVICE FOR WARM WATER AND COMPRESSION TOOL FOR EXECUTING THE METHOD
PROCÉDÉ DE FABRICATION D'UN ACCUMULATEUR SOUS VIDE POUR L'EAU CHAUDE ET OUTIL DE COMPRESSION DESTINÉ À LA MISE EN OEUVRE DU PROCÉDÉ

(30) Priorität: 04.11.2020 DE 102020129107
(43) Veröffentlichungstag der Anmeldung: 11.05.2022
(73) Patentinhaber: Stiebel Eltron GmbH & Co. KG, 37603 Holzminden (DE)
(72) Erfinder: Meng, Andreas, 34346 Hann. Münden (DE); Langer, Manfred, 37688 Beverungen (DE)

(56) Entgegenhaltungen:
- DE-A1- 2 545 200
- DE-U1-202010 013 137
- JP-A- H0 285 693
- JP-A- S61 213 599

## Beschreibung

Die Erfindung betrifft ein Verfahren zur Herstellung eines Vakuumspeichers für Warmwasser mit den Merkmalen des Oberbegriffs des Anspruchs 1.

Bei der Fertigung eines Vakuumspeichers, wie in DE 10 2017 209 782 A1, DE 10 2013 016 705 A1,DE 10 2016 012 922 A1 sowie in DE 20 2010 013 137 U1 beschrieben, sind mehrere Verfahrensschritte erforderlich, nämlich zumindest das Herstellen eines Doppelmantelspeichers, das Befüllen des Zwischenmatentelraums mit pyrogener Kieselsäure in Granulatform als Dämmmaterial, die Evakuierung des Zwischenmatentelraums und das Verschließen des Ringspaltes. Die genannten Patentanmeldungen beschreiben jedoch die praktische Umsetzung der Herstellung in einem industriellen Fertigungsverfahren nicht vollständig. Gerade die Verbindung der Anschlüsse mit den Leitungen zur Befüllung und Evakuierung sowie das nachfolgende Lösen dieser Verbindungen braucht Zeit, zumal das einmal hergestellte Vakuum vollständig erhalten bleiben muss und auch noch prüfbar sein soll.

DE 202 010013137 U1 zeigt ein Verfahren nach dem Oberbegriff des Anspruchs 1.

In DE 2545200 A1, JP H0285693 A und JP S61213599 A werden Verfahren gezeigt, um Kapillarrohre zu verpressen und kalt zu verschweißen.

Die Aufgabe der Erfindung besteht somit darin, eine effiziente Fertigung eines Vakuumspeichers im industriellen Maßstab zu ermöglichen.

Diese Aufgabe wird durch ein Verfahren zur Herstellung eines Vakuumspeichers für Warmwasser mit den Merkmalen des Anspruchs 1 gelöst.

Nach der Erfindung ist zur Herstellung vorgesehen, das wenigstens eine Rohrelement, über das der Dämmstoff eingefüllt bzw. Luft abgesaugt wird, so dicht abzuquetschen, dass das Vakuum erhalten bleibt. Dafür wird die Beaufschlagung mit einer Quetschkraft beibehalten. Die Quetschkraft kann zu Beginn der Quetschung größer sein, um die plastische Verformung zu ermöglichen, und dann abnehmen. Sie muss aber so groß sein, dass keine elastischen Rückstellungen eintreten können, bevor nicht das Rohr abgetrennt und dicht verschlossen worden ist. Durch die Durchführung der Quetschung werden keine Ventilelemente benötigt, die dauerhaft an dem Vakuumspeicher verbleiben müssen, wodurch die Herstellungskosten gesenkt werden und Bauraum eingespart wird.

Wesentlich ist, dass die Quetschung so erfolgt, dass der Rohrmantel einerseits verformt wird, wobei an der Quetschstelle ein gasdichter Abschluss erreicht wird und andererseits darf der Rohrmantel nicht einreißen. Daher sieht die Erfindung vor, Pressbacken zu verwenden, die planparallel zueinander ausgerichtet sind und in der parallelen Ausrichtung aufeinander zu bewegt werden und eine Schwenkbewegung von Presswerkzeugteilen in Bezug auf das Rohrelement vermieden wird.

Ein dafür geeignetes Quetschwerkzeug kann in eine handelsübliche, motorisch angetriebene Presszange eingesetzt werden, wie sie beispielsweise zur Verpressung von Rohrfittings in der Heizungs- und Sanitärtechnik verwendet wird. Der besondere Vorteil liegt neben der parallelen Ausrichtung der Pressbacken darin, dass ein einseitig offener Pressenraum gegeben ist. Das Quetschwerkzeug kann daher von der Seite her an den Strang, der sich von einem Vorratsbehälter über die Befüllleitung und das Rohrelement bis in den Zwischenmantelraum erstreckt, angesetzt werden, um an dem Rohrelement eine Quetschung vorzunehmen.

Insbesondere sind im Querschnitt V-förmige Pressbacken vorgesehen, die mit ihren vorspringenden Presskanten auf gleicher Höhe ausgerichtet sind, wobei der Winkel zwischen den Flächen der Pressbacken mindestens 90°, bevorzugt mindestens 120° beträgt. Durch diese Formgebung wird bei einem dünnwandigen Kupferrohr das Einreißen des Rohrmantels vermieden.

Für eine optimale Verpressung kann vorgesehen sein, den Abstand der Pressbacken einstellbar zu machen, um die entsprechende Wanddicke des Rohres zu berücksichtigen.

Die Presszange kann hydraulisch, elektrisch oder mittels Akkustrom betrieben werden.

Die Erfindung wird nachfolgend mit Bezug auf die Zeichnungen näher erläutert. Die Figuren zeigen im Einzelnen:
- Fig. 1: ein Füll- und Prüfsystem für einen Doppelmantelspeicher in schematischer Darstellung;
- Fig. 2: ein Quetschwerkzeug in perspektivischer Ansicht;
- Fig. 3: das Quetschwerkzeug mit Rohrelement von oben;
- Fig. 4: das Quetschwerkzeug mit einer Werkzeugaufnahme in perspektivischer Ansicht;
- Fig. 5: das Quetschwerkzeug mit der Werkzeugaufnahme in perspektivischer Explosionsansicht;

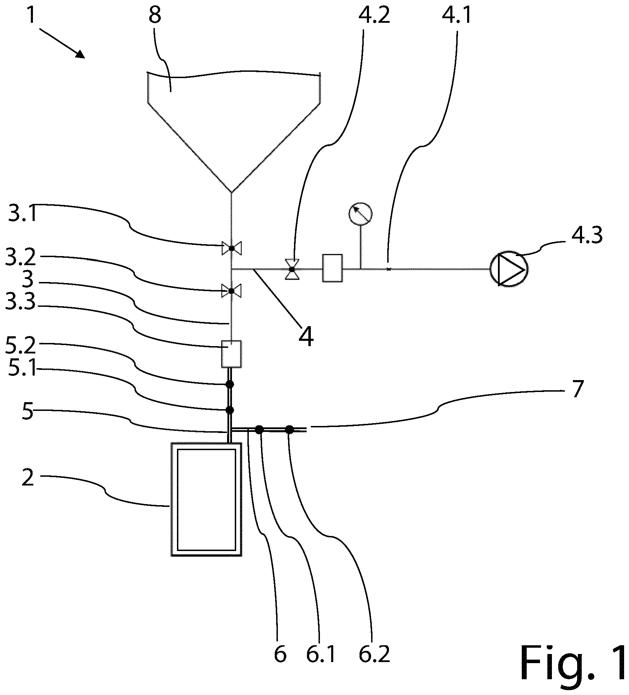

Das Verfahren zur Herstellung eines Vakuumspeichers für Warmwasser wird anhand des in Figur 1 dargestellten Füll- und Prüfsystems 1 beschrieben.

Beim Fertigungsprozess des Vakuumspeichers wird zunächst in herkömmlicher Weise ein Doppelmantelspeicher 2 aus Stahl hergestellt, vorteilhaft aus Baustahl, Edelstahl und/oder aus einer Kombination verschiedener Stähle. Eine Emaillierung wird vorteilhaft auf wasserführende Oberflächen aufgebracht, insbesondere wenn der Behälter aus Baustahl gefertigt ist. In einem Zwischenmantelraum, zwischen den beiden Hüllen des Doppelmantelspeichers 2, mündet ein Rohrelement 5. Davon zweigt ein weiteres Rohrelement 6 ab. Die Rohrelemente 5, 6 sind Kupferrohre, beispielsweise des Typs Cu 22x1.

Das Rohrelement 5 wird mit einer Befüllleitung 3 verbunden, von der wiederum eine Vakuumsaugleitung 4 abzweigt. Über Ventile 3.1, 3.2 kann die Befüllleitung 3 vor und nach dem Abzweig der Vakuumsaugleitung 4 abgesperrt werden. Die Vakuumsaugleitung kann insbesondere während des Befüllvorgangs über ein Ventil 4.2 von der Befüllleitung 3 getrennt werden. Ein weiteres Ventil 4.1 ermöglicht die Druckmessung entweder in dem mit dem Doppelmantelspeicher 2 verbundenen Teil des Systems oder in dem mit einer Vakuumpumpe 4.3 verbunden Teil der Vakuumsaugleitung 4.

An dem aus dem Doppelmantelspeicher 2 herausragenden Teil des Rohrelements 5 sind ein Quetschpunkt 5.1 und ein Abscherpunkt 5.2 definiert. Unterhalb des Quetschpunkts 5.1 befindet sich ein zusätzlicher Abgang einer Prüfleitung 6 mit einem Prüfventil 7. Auch an der Prüfleitung sind ein Quetschpunkt 6.1 und ein Abscherpunkt 6.2 vorgesehen. Für die Punkte 5.1, 5.2, 6.1, 6.2 reicht in der Fertigung eine ungefähre Lageangabe, da die Rohrstümpfe bei dem fertigen Warmwasserspeicher durch ein Gehäuse überdeckt sind. Nach dem Anschluss des Doppelmantelspeichers 2 an das Füll- und Prüfsystems 1 wird der in einem Vorratsbehälter 8 in Granulatform gespeicherte Dämmstoff über die Befüllleitung 3 und das Rohrelement 5 eingebracht. Das Ventil 3.1 wird geschlossen und das Ventil 4.2 geöffnet, so dass nun die Vakuumpumpe 4.3 über die Leitungen 3, 4 und das Rohrelement 5 den Zwischenmantelraum evakuieren kann.

Durch Schließen des Ventils 3.2 wird der in Figur 1 oben dargestellte Teil des Füll- und Prüfsystems 1 abgesperrt. Der mit dem Rohrelement 5 über eine Kupplung 3.3 verbundene Teil der Befüllleitung 3 steht bei laufender Vakuumpumpe 4.3 unter Vakuum. Um die Befüllleitung 3 von dem Rohrelement 5 in diesem Zustand voneinander trennen zu können, werden folgende Schritte durchgeführt:
- Das Rohrelement 5 wird an einem Quetschpunkt 5.1 mit einem Quetschwerkzeug verpresst und die Quetschung wird gehalten; dadurch ist am Quetschpunkt eine druckdichte Absperrung gebildet. Damit die Absperrung des Rohrelements 5 druckdicht bleibt, wird die Quetschung gehalten, das heißt, das Rohrelement 5 bleibt mit einer ausreichenden Quetschkraft beaufschlagt, so dass es keine elastischen Rückfederungen geben kann.
- Das Rohrelement 5 wird an einem Abscherpunkt 5.2 abgetrennt und fluiddicht verschlossen, z. B. verlötet.
- Die Quetschung an dem Quetschpunkt 5.1 wird entspannt und das Quetschwerkzeug wird abgenommen.

Die Fertigung des Doppelmantelspeichers 2 ist damit abgeschlossen. Der Doppelmantelspeicher 2 kann aus der Füll- und Prüfstation 1 entfernt werden.

Zur Qualitätskontrolle ist eine nachträgliche Prüfung des anliegenden Unterdrucks sinnvoll. Der Druck kann über das Prüfleitungsrohrelement 6 und das Prüfventil 7 geprüft werden. Hierfür wird ein Prüfzeitraum definiert, über den der Doppelspeicher 2 ausgelagert bleibt, so dass eventuelle Undichtigkeiten registrierbar sind. Nach der Prüfung wird das Prüfleitungsrohrelement 6, an dem das Prüfventil 7 verlötet ist, verschlossen. Das Prüfventil 7 wird anschließend recycelt. Zum Verschließen des Prüfleitungsrohrelements 6 wird vorgegangen wie bei dem Rohrleitungselement 5 auch:
- Das Prüfleitungsrohrelement 6 wird an einem Quetschpunkt 6.1 verpresst und die Quetschung wird gehalten.
- Das Prüfleitungsrohrelement 6 wird bei gehaltener Quetschung an einem Abscherpunkt 6.2 abgetrennt und fluiddicht verschlossen.
- Die Quetschung an dem Quetschpunkt 6.1 wird entspannt.

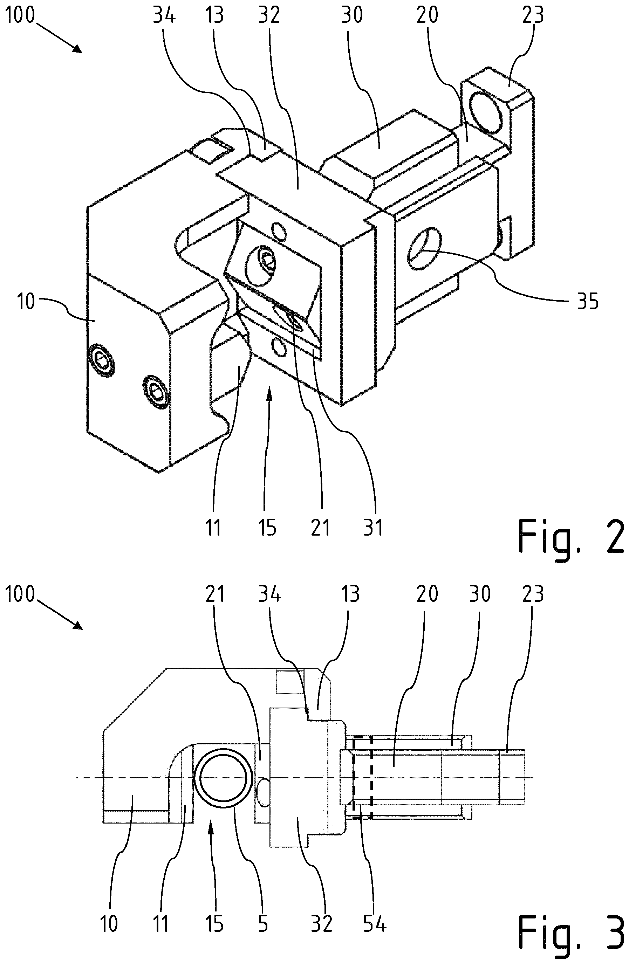

Figur 2 zeigt ein zur Durchführung des Verfahrens geeignetes Quetschwerkzeug 100 in perspektivischer Ansicht. Dieses besteht aus einem Grundkörper 30, der nach der Kopplung mit einer geeigneten Antriebseinheit den feststehenden Teil bildet. Er setzt sich in einem Pressbackenhalter 10 fort. Der Pressbackenhalter 10 ist im dargestellten Ausführungsbeispiel als gesondertes Teil ausgebildet, das mit dem Grundkörper 30 verschraubt ist. Zur Übertragung der Kräfte beim Quetschvorgang liegt ein Anschlag 13 des Pressbackenhalters 10 an eine Anschlagkante 34 des Grundkörpers 30 an. Dadurch können Pressbacken 11 mit verschiedenen Größen an dem Grundkörper 30 befestigt werden, um die Größe eines Pressenraums 15 an den beim Quetschvorgang verwendeten Rohrdurchmesser anzupassen. Zum Pressenraum 15 hin endet der Grundkörper 30 in einem Rahmen 32 mit einem rechteckigen Ausschnitt der als Führungsausnehmung 31 dient.

Ein Pressstempel 20 bildet den beweglichen Teil. Er ist in der Führungsausnehmung des Grundkörpers 30 verschiebbar gelagert und tritt mit seiner Pressbacke 21 aus dem Rahmen 32 heraus.

Im rückwärtigen Bereich besitzt der Grundkörper 30 eine durchgehende Ausnehmung 35, in die ein Anschlagelement von einer mit einer Antriebseinheit verbundenen Werkzeugaufnahme eingeschoben werden kann. Das Anschlagelement legt den Grundkörper 30 an der Antriebsmaschine fest. Es durchsetzt auch den Pressstempel 20, der zur Durchführung ein Langloch aufweist, so dass der Pressstempel 20 gegenüber dem Grundkörper verschiebbar ist. Nach hinten hin ist der bewegliche Pressstempel 20 in einem Anschlag 23 verbreitert.

Die Pressbacken 11, 21 sind im Querschnitt V-förmig ausgebildet und ihre jeweils in den Pressenraum 15 ragenden Presskanten sind auf gleicher Höhe angeordnet.

Figur 3 zeigt das Quetschwerkzeug 100 in einer Ansicht von oben, wobei auch die Lage des Anschlagelements 54 gekennzeichnet ist. Gut sichtbar ist die exakt parallele Ausrichtung der Pressbacken. Im Pressenraum 15 ist ein dort eingefügtes Rohrelement 5 dargestellt. Durch die seitliche Öffnung des Pressenraums kann das Quetschwerkzeug 100 seitlich an das feststehende Rohrelement 5 geführt werden, um die Quetschung vorzunehmen.

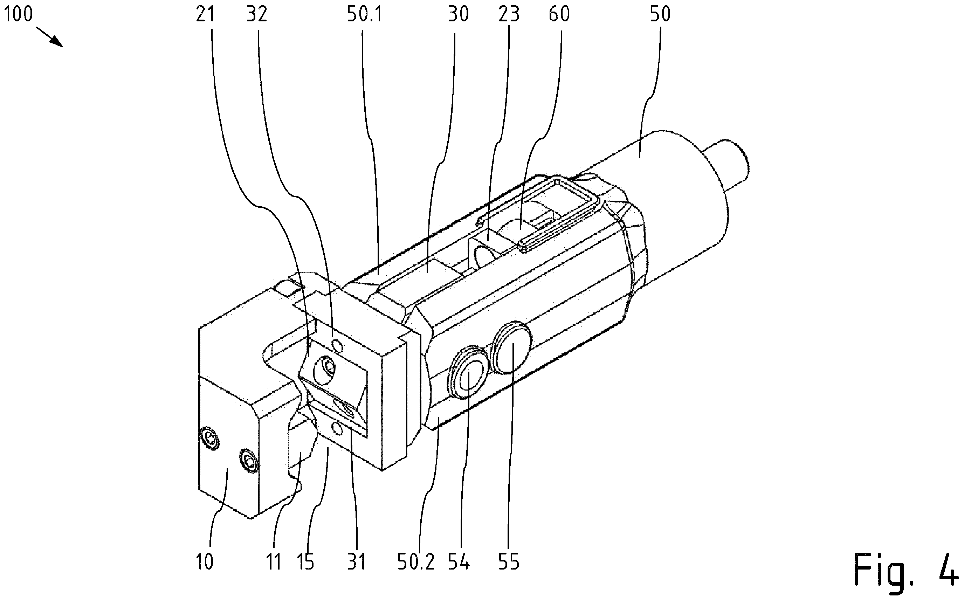

In Figur 4 ist das montierte Quetschwerkzeug 100 zusammen mit einer Werkzeugaufnahme 50 einer handelsüblichen Pressmaschine dargestellt. Die Werkzeugaufnahme 50 besitzt zwei Gehäusehälften 50.1, 50.2, zwischen denen das Quetschwerkzeug 100 eingesetzt und mit dem Anschlagelement 54 gesichert ist. Ein Sperrelement 55 dient der Sicherung des eingesetzten Anschlagelements 54. Der Antrieb erfolgt über ein Antriebselement 60, das gegen den Anschlag 23 des Presstempels 20 drückt.

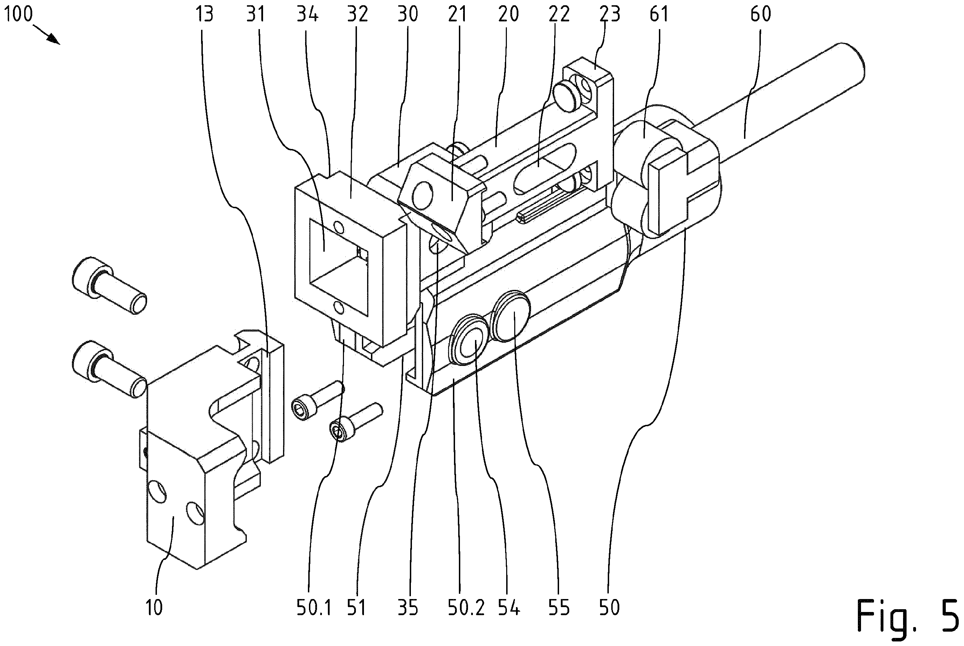

Alle Einzelteile des Quetschwerkzeugs 10 samt der Werkzeugaufnahme 50 sind in der Explosionsdarstellung in Figur 5 dargestellt. Insbesondere ist hier die Langlochausnehmung 22 im Pressstempel 20 erkennbar. Das Antriebselement 60 ist in einer bei Presswerkzeugen üblichen Ausführungsform an seinem vorderen Ende mit einem Rollenpaar 61 versehen, welches bei den handelsüblichen Presszangen zum seitlichen Verschwenken zweier Pressbacken dient, die gelenkig an einem Grundkörper eines Presswerkzeugs gelagert sind. Bei dem Quetschwerkzeug 100 nach der vorliegenden Erfindung wird von dem handelsüblichen Presswerkzeug nur die axiale Vorschubkraft für den Pressstempel 20 benötigt, sodass der Pressstempel 20 mit dem Anschlag 23 nach hinten verbreitert ist, um eine gute Abstützung an dem Rollenpaar 61 zu erreichen.

## Patentansprüche

1. Verfahren zur Herstellung eines Vakuumspeichers für Warmwasser, mit wenigstens folgenden Schritten:
- Befüllen eines Zwischenmantelraums in einem Doppelmantelspeicher (2) mit einem Dämmstoff, der als Fluid über eine in dem Zwischenmantelraum mündende Befüllleitung (3), einbringbar ist;
- Verschließen der Befüllleitung (3);
- Evakuierung des Zwischenmantelraums über eine Vakuumsaugleitung (4);
- Verschließen der Vakuumsaugleitung (4);
**dadurch gekennzeichnet,**
- **dass** die Befüllleitung (3) und die Vakuumsaugleitung (4) jeweils über wenigstens ein Absperrventil (3.1, 3.2, 4.1, 4.2) an ein Rohrelement (5) angeschlossen werden, das in dem Zwischenmantelraum mündet;
- **dass** das Rohrelement (5) nach dem Befüllen und Evakuieren des Zwischenmantelraums an einem Quetschpunkt (5.1) verpresst wird und die Quetschung gehalten wird;
- **dass** das Rohrelement (5) bei gehaltener Quetschung an einem Abscherpunkt (5.2) abgetrennt und fluiddicht verschlossen wird,
- **dass** die Quetschung an dem Quetschpunkt (5.1) entspannt wird und
- **dass** als Rohrelement (5) ein Kupferrohr verwendet wird, das an der Abscherstelle (5.2) verlötet wird.

2. Verfahren nach Anspruch 1, **dadurch gekennzeichnet,**
- **dass** ein Prüfleitungsrohrelement (6) vorgesehen ist, das in dem Zwischenmantelraum oder in dem Rohrelement (5) zwischen dem Zwischenmantelraum und dem Quetschpunkt (5.1) mündet;
- **dass** nach der Quetschung am Quetschpunkt (5.1) oder nach dem Verschluss des Rohrelements (5) am Abscherpunkt (5.2) eine Vakuumdruckprüfung über das Prüfleitungsrohrelement (6) vorgenommen wird;
- **dass** nach Durchführung der Vakuumdruckprüfung das Prüfleitungsrohrelement (6) an einem zweiten Quetschpunkt (6.1) verpresst wird und die Quetschung gehalten wird;
- **dass** das Prüfleitungsrohrelement (6) bei gehaltener Quetschung an einem zweiten Abscherpunkt (6.2) abgetrennt und fluiddicht verschlossen wird
- **dass** die Quetschung an dem Quetschpunkt (6.1) entspannt wird und
**dass** als Prüfleitungsrohrelement (6) ein Kupferrohr verwendet wird, das an der Abscherstelle (6.2) verlötet wird.

3. Verfahren nach Anspruch 1 oder 2, **dadurch gekennzeichnet, dass** die Quetschung der Rohrelemente (5, 6) jeweils mit zwei Pressbacken (11, 21) durchgeführt wird, die unter Einschluss des Rohrelements (5, 6) in paralleler Ausrichtung aufeinandergedrückt werden.

## Claims

1. A method for manufacturing a vacuum cylinder for hot water, comprising at least the following steps:
- filling a jacket space in a double-jacket cylinder (2) with an insulating material which can be introduced as a fluid through a fill line (3) which opens into the jacket space;
- sealing the fill line (3);
- evacuating the jacket space through a vacuum suction line (4);
- sealing the vacuum suction line (4);
**characterised in that**:
- the fill line (3) and the vacuum suction line (4) are each connected to a tube element (5) which opens into the jacket space via at least one shut-off valve (3.1, 3.2, 4.1, 4.2);
- after filling and evacuating the jacket space, the tube element (5) is pressed at a pinch point (5.1) and the pinch is held;
- the tube element (5), with the pinch being held, is cut at a shear point (5.2) and sealed to be fluid tight,
- the pinch is released at the pinch point (5.1), and
- a copper tube is used as the tube element (5) and soldered at the shear point (5.2).

2. The method according to claim 1, **characterised in that**:
- a test line tube element (6) is provided which opens into the jacket space or into the tube element (5) between the jacket space and the pinch point (5.1);
- after pinching at the pinch point (5.1), or after sealing the tube element (5) at the shear point (5.2), a vacuum pressure test is performed through the test line tube element (6);
- after performing the vacuum pressure test, the test line tube element (6) is pressed at a second pinch point (6.1) and the pinch is held;
- the test line tube element (6), with the pinch being held, is cut at a second shear point (6.2) and sealed to be fluid tight;
- the pinch is released at the pinch point (6.1), and
a copper tube is used as the test line tube element (6) and soldered at the shear point (6.2).

3. The method according to claim 1 or 2, **characterised in that** pinching of each of the tube elements (5, 6) is performed with two pressing jaws (11, 21), which are pressed against each other in parallel alignment while enclosing the tube element (5, 6).

## Revendications

1. Procédé de fabrication d'un accumulateur sous vide pour l'eau chaude, comportant au moins les étapes suivantes consistant à :
- remplir un espace entre enveloppes dans un réservoir à double enveloppe (2) avec une matière isolante qui peut être introduite sous la forme de fluide par le biais d'une conduite de remplissage (3) débouchant dans l'espace entre enveloppes ;
- fermer la conduite de remplissage (3) ;
- créer le vide d'air de l'espace entre enveloppes par le biais d'une conduite d'aspiration à vide (4) ;
- fermer la conduite d'aspiration à vide (4) ;
**caractérisé en ce que**
- la conduite de remplissage (3) et la conduite d'aspiration à vide (4) sont respectivement reliées à un élément de tube (5) par le biais d'au moins un robinet d'arrêt (3.1, 3.2, 4.1, 4.2), ledit élément de tube débouchant dans l'espace entre enveloppes ;
- **en ce que**, après le remplissage et la création du vide d'air de l'espace entre enveloppes, l'élément de tube (5) est comprimé en un point de compression (5.1) et la compression est maintenue ;
- **en ce que**, lorsque la compression est maintenue, l'élément de tube (5) est coupé en un point de cisaillement (5.2) et fermé de manière étanche aux fluides,
- **en ce que** la compression est relâchée au point de compression (5.1) et
- **en ce qu'**un tube en cuivre, qui est brasé au niveau du point de cisaillement (5.2), est utilisé en guise d'élément de tube (5).

2. Procédé selon la revendication 1, **caractérisé en ce que**
- un élément de tube de conduite d'essai (6) est prévu, lequel débouche dans l'espace entre enveloppes ou dans l'élément de tube (5) entre l'espace entre enveloppes et le point de compression (5.1) ;
- **en ce qu'**un essai de pression du vide est effectué par le biais de l'élément de tube de conduite d'essai (6) après la compression au point de compression (5.1) ou après la fermeture de l'élément de tube (5) au point de cisaillement (5.2) ;
- **en ce que**, après la réalisation de l'essai de pression du vide, l'élément de tube de conduite d'essai (6) est comprimé en un second point de compression (6.1) et la compression est maintenue ;
- **en ce que**, lorsque la compression est maintenue, l'élément de tube de conduite d'essai (6) est coupé en un second point de cisaillement (6.2) et fermé de manière étanche aux fluides
- **en ce que** la compression est relâchée au point de compression (6.1) et
**en ce qu'**un tube en cuivre, qui est brasé au niveau du point de cisaillement (6.2), est utilisé en guise d'élément de tube de conduite d'essai (6).

3. Procédé selon la revendication 1 ou 2, **caractérisé en ce que** la compression des éléments de tube (5, 6) est réalisée respectivement par deux mâchoires de compression (11, 21), qui sont pressées l'une contre l'autre dans une orientation parallèle en incluant l'élément de tube (5, 6).
